# EUROPEAN PATENT SPECIFICATION

(11) **EP 4 601 089 B1**
(45) Date of publication and mention of the grant of the patent: **02.09.2026**
(21) Application number: 24191987.7
(22) Date of filing: 31.07.2024
(51) Int. Cl.: H01M 50/209, H01M 50/213, H01M 50/503, H01M 50/507, H01M 50/55

(54) **BATTERY CELL ASSEMBLY, BATTERY PACK, AND TRANSPORTATION DEVICE COMPRISING THE SAME**
BATTERIEZELLENANORDNUNG, BATTERIEPACK UND TRANSPORTVORRICHTUNG DAMIT
ENSEMBLE ÉLÉMENT DE BATTERIE, BLOC-BATTERIE ET DISPOSITIF DE TRANSPORT LE COMPRENANT

(30) Priority: 06.02.2024 KR 20240018124
(43) Date of publication of application: 13.08.2025
(73) Proprietor: LG Energy Solution, Ltd., Seoul 07335 (KR)
(72) Inventor: YOU, Dong Won, 34122 DAEJEON (KR)
(74) Representative: Plasseraud IP

(56) References cited:
- GB-A- 2 590 460
- US-A1- 2002 006 544
- US-A1- 2020 176 735
- US-B2- 10 497 912

## Description

### [Technical Field]

The present invention relates to a battery cell assembly, a battery pack, and a transportation device comprising the same, and more specifically, relates to a battery assembly, a battery pack, and a transportation device comprising the same, capable of reducing maintenance costs of the battery assembly, battery pack, and transportation device comprising the same by easily replacing individual battery cells.

### [Background Art]

Recently, rechargeable secondary batteries have been widely used as an energy source for wireless mobile devices. In addition, secondary batteries have also attracted attention as an energy source for electric transportation devices, hybrid electric transportation devices, and the like., which are proposed as a solution to air pollution from existing gasoline transportation devices, diesel transportation devices, and the like, using fossil fuels. Therefore, the types of applications that use secondary batteries are very diverse due to the advantages of secondary batteries, and it is expected that secondary batteries will be applied to more fields and products in the future.

Generally, the secondary battery can be provided with a plurality of battery cells, where depending on the shape of the battery case, such a battery cell is classified into cylindrical battery and rectangular battery cells in which an electrode assembly is embedded into a cylindrical or rectangular metal can, and pouch-type battery cells in which an electrode assembly is embedded into a pouch-type case of an aluminum laminate sheet, and the electrode assembly embedded into the battery case is a power generation element consisting of a structure of a positive electrode, a negative electrode, and a separator interposed between these positive and negative electrodes to be capable of charging and discharging, which is classified into a jelly-roll type wound by interposing a separator between long sheet-shaped positive and negative electrodes coated with active materials, and, and a stack type in which multiple positive and negative electrodes with a certain size are sequentially laminated in a state where a separator is interposed therebetween.

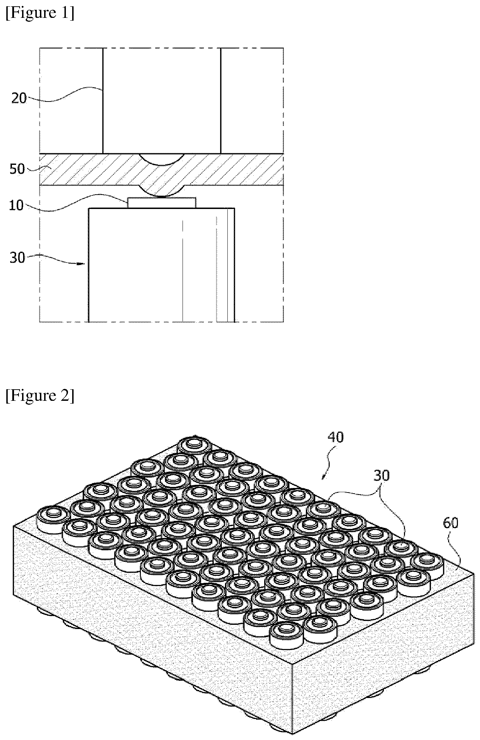

Figure 1 is a cross-sectional diagram schematically showing a welding process of a general battery cell (30) and a bus-bar (50). Then, Figure 2 is a perspective diagram schematically showing a battery cell assembly (40) including battery cells (30) fixed using an adhesive (60) of a conventional art.

Referring to Figures 1 and 2, in the advanced technology field, a battery pack (not shown) comprising a battery cell assembly (or battery cell laminate) consisting of multiple battery cells (30), and a battery management system is used to supply a power source to various electronic devices. As in Figure 1, generally, the battery cell assembly (40) is electrically connected by a method, such as resistance welding, using a resistance welding rod (20) between an electrode terminal (10) of each of multiple battery cells (30) mounted therein and a bus-bar (50) in the form of a metal plate.

In addition, as in Figure 2, the battery cells (30) of the conventional battery cell assembly have been sometimes fixed using an adhesive (60) (potting resin) or the like inside an exterior case (not shown) of the battery cell assembly (40) to prevent damage to the electrical connection by outer shocks.

However, in the battery cell assembly (40) of such a conventional art, when problems such as overdischarge, damage, or short circuit occurred in some battery cells (30) among multiple battery cells (30) during use, it was difficult to replace only some battery cells (30) in which the problems occurred individually. That is, multiple battery cells (30) were bonded to the bus-bar (50), and the like, whereby upon separating them from the bus-bar (50), the damage to the bus-bar (50) occurred, so that it was easy for the electrical connection of the normal battery cells (30) to be disconnected. Also, to separate the battery cell (30) fixed in the external case with the adhesive (60), the adhesive (60) must be removed, but an operation of removing the adhesive (60) was expensive and time-consuming, thereby making it inefficient.

Therefore, it was inevitable to replace the battery assembly (40) of the conventional art with a minimum unit such as a module assembly consisting of several battery cells (30) without fixing with any adhesive (60), or to replace it with a new battery cell assembly (40). In such a replacement method, normal battery cells must be discarded together with defective battery cells and it is difficult to recycle the discarded battery cells, so that there are problems of increasing maintenance costs of the battery cell assembly (40) and causing environmental pollution. Besides, as normal functioning battery cells are discarded together with defective battery cells, this makes the recycling process more complex and less effective thus increasing the global greenhouse gas. Such battery cell assembly (40) particularly fails to comply with European regulations concerning batteries and waste batteries namely the UE Regulation n°2023/1542 of the European Parliament and of the council.

There is a need to develop a battery assembly, a battery pack, and a transportation device comprising the same, capable of solving these problems.

### [Prior Art Documents]

### [Patent Documents]

Korean Laid-Open Patent Publication No. 2016-0100673

Document US 2020/176735 A1 discloses a battery module including cells, wherein each of the cells includes a positive electrode terminal and a negative electrode terminal disposed on one end part, the one end parts being positioned on a same side, and a battery block constituted by a row of the plurality of cells. The battery module further includes a plate disposed above the one end parts of the cells being arranged, and the plate includes: holes through which the positive electrode terminal and the negative electrode terminal are exposed; and a plurality of conductive members disposed on a surface. The plurality of conductive members extend along the row, two of the plurality of conductive members are disposed in the battery block, and each of the plurality of conductive members includes terminal connecting parts connected through the holes to the terminals of a same pole.

Document US 2002/006544 A1 discloses a cell module structure in which cylindrical cells are connected to each other via a terminal connecting portion of a bus bar plate. An inner cell terminal and an outer cell terminal having different polarities are coaxially aligned at an end of the cell. An inner connecting terminal and an outer connecting terminal corresponding to the inner cell terminal and the outer cell terminal of the cell are coaxially aligned in the terminal connecting portion of the bus bar plate. The inner cell terminal and the outer cell terminal of the cell are connected to the terminal connecting portion of the bus bar plate in a connected condition in which the outer cell terminal of the cell contacts the outer connecting terminal of the terminal connecting portion, and the inner cell terminal contacts the inner connecting terminal.

Document GB 2590460 A discloses a battery module comprises a plurality of cells arranged in first and second banks, each cell having one end supported on a base and another end, opposite the first end, having both a first-polarity terminal and a second-polarity terminal. The module has a first busbar overlying the plurality of cells and a second busbar overlying the first busbar. The first busbar has a plurality of first connection portions electrically connected to the first-polarity terminals of each cell in the first bank and a plurality of second connection portions interspersed with apertures. The second connection portions are electrically connected to the second-polarity terminals of each cell in the second bank, and the apertures in the first busbar are aligned with the first-polarity terminals of each cell in the second bank. The second busbar has a plurality of first connection portions connected through the apertures of the first busbar to the first-polarity terminals of each cell in the second bank. Further busbars, may be used for connecting further banks of cells, all busbars being arranged in an overlapping configuration.

### [Disclosure]

### [Technical Problem]

The present invention is intended to solve problems occurring in conventional battery assemblies, battery packs, and transportation devices comprising the same.

Through one example of the present invention, a battery cell is provided to be detachable from a holder assembly, whereby a plurality of battery cells mounted without damage to a fixing member in which the battery cells are fixed within an external case, or an electrical connection member (bus-bar, etc.) is provided to be individually replaceable, so that it is intended to provide a battery assembly, a battery pack, and a transportation device comprising the same, capable of effectively reducing replacement costs and time, and lowering battery pack maintenance costs.

### [Technical Solution]

In order to achieve the above-described object, the invention relates to a battery cell assembly according to claim 1. Optional features of the battery cell assembly after the invention are listed in dependent claims 2 to 11.

The invention also relates to a battery pack according to claim 12.

The invention further relates to a transportation device according to claim 13.

According to one example of the present invention, a battery cell assembly is provided, which comprises: a plurality of battery cells equipped with a positive electrode terminal and a negative electrode terminal; a housing provided to accommodate the plurality of battery cells; and a plurality of holder assemblies provided to be detachable to the plurality of battery cells, respectively, and including a positive bus-bar provided to be electrically connected by contacting the positive electrode terminal, and a negative bus-bar provided to be connected to the negative electrode terminal.

Within the meaning of the present invention, the expression "readily removable" or "detachable" means that the battery cell may be removed from the holder assembly with the use of commercially available tools, without requiring the use of specialized tools such as proprietary tools, thermal energy, or solvents to disassemble the battery cell and the holder assembly.

According to the invention, each holder assembly and the respective battery cell may be assembled in a reversible manner, in other words the battery cell may be removed from and mounted to the holder assembly without damage to the battery cell or to the assembly holder. In other words, a battery cell welded to an holder assembly or to the housing, is not readily removable or detachable from the holder assembly and thus is not part of the present invention.

For example, the battery cell may be readily removable thanks to elastic clamping means arranged in the assembly holder, able to apply elastic pressurization on the battery call, or snap means arranged in the assembly holder to reversibly hold into place the battery cell, or screwing means arranged in the assembly holder to cooperate with screwing means of the battery cell, etc. The battery cell assembly according to the invention may comprise one or more of the following features, in any technically feasible combination.

The holder assembly may be provided so that when the positive electrode terminal is in contact with the positive electrode bus-bar, the negative electrode bus-bar is in contact with the negative electrode terminal.

The holder assembly may be provided so that when the battery cell is separated from the holder assembly, the positive electrode terminal and the negative electrode terminal are sequentially separated from the positive electrode bus-bar and the negative electrode bus-bar.

Each of the plurality of holder assemblies may comprise a positive electrode mold having electrical insulation and coupled such that a part of the positive electrode bus-bar is exposed to the outside.

In the negative electrode bus-bar, a positive electrode exposure hole may be formed so that it is coupled to the positive electrode mold, and an exposed portion of the positive electrode bus-bar is exposed to the outside.

The positive electrode bus-bar may comprise: a positive electrode disk portion located at the lower portion of the positive electrode mold; a positive electrode connection unit having a shape protruding from the positive electrode disk portion toward the positive electrode terminal and provided to elastically pressurize the positive electrode terminal; and a positive electrode protrusion portion protruding and extending from the positive electrode disk portion to be inserted into the positive electrode exposure hole.

The positive electrode connection unit may comprise: a body portion having electrical conductivity and provided to be inserted into the positive electrode mold; a pressurization moving portion having electrical conductivity, equipped at the lower portion of the body portion, being in direct contact with the positive electrode terminal, and provided to be movable in a direction of pressurizing the positive electrode terminal; and an elastic member embedded into the body portion and provided to elastically pressurize the pressurization moving portion toward the positive electrode terminal.

At least one through hole may be formed in the positive electrode disk portion.

The positive electrode connection unit may be equipped with a stopper on the body portion to prevent the pressurization moving portion in a state where it is inserted into the through hole from moving in the insertion direction.

The positive electrode mold may comprise: a mold disk portion provided to cover the upper portion of the positive electrode disk portion; and a mold protrusion portion protruding in an upward direction from the mold disk portion to cover a side portion of the positive electrode protrusion portion and having an exposure hole formed so that the upper portion of the positive electrode protrusion of the coupled positive electrode bus-bar is exposed to the outside.

The negative electrode bus-bar may comprise: a negative electrode disk portion coupled to the housing; a negative electrode convex portion convexly formed in an upward direction from the negative electrode disk portion to form a storage space in which the positive electrode mold is accommodated; and a negative electrode connection portion bent in a downward direction from the negative electrode disk portion and extending from the negative electrode disk portion to be in direct contact with the positive electrode terminal.

In the negative electrode connection portion, a connection opening may partially be formed, and a connection protrusion extending long from the inner periphery of the connection opening and bent to partially protrude toward the negative electrode terminal to enable elastic pressurization may be formed.

The negative electrode connection portion may be equipped with a connection convex portion partially protruding toward the negative electrode terminal to enable elastic pressurization.

The housing may be equipped with a storage portion accommodating the holder assembly, and a fixing groove provided so that the negative electrode connection portion of the negative electrode bus-bar is inserted to be fitted therein may be formed in the storage portion.

In the housing, a positive electrode opening opened so that the positive electrode bus-bar is exposed to the outside and a negative electrode opening opened so that the negative electrode bus-bar is exposed to the outside may be formed.

The housing may comprise: an upper cover provided to cover the upper and middle portions of the plurality of battery cells; and a lower cover provided to cover the lower portion of the plurality of battery cells.

It may further comprise a plurality of connection members mounted on the upper portion of the upper cover, and each being equipped with at least one of a positive electrode contact portion in contact with the positive electrode bus-bar through the positive electrode opening, and a negative electrode contact portion in contact with the negative electrode bus-bar through the negative electrode opening.

The negative electrode bus-bar may be embedded into the upper cover through injection molding.

The lower cover may be equipped with a plurality of mounting grooves having a storage space accommodating each lower portion of the plurality of battery cells.

According to an embodiment, each assembly holder, in particular the negative electrode bus-bar may comprise elastic clamping means able to apply elastic pressurization on the battery call.

In an embodiment, the negative electrode bus-bar may comprise: a negative electrode disk portion coupled to the housing; and a negative electrode connection portion bent in a downward direction from the negative electrode disk portion and extending from the negative electrode disk portion to be in direct contact with the positive electrode terminal, the negative electrode connection portion being equipped with a connection convex portion partially protruding toward the negative electrode terminal to enable elastic pressurization of the battery cell. Such arrangement allows holding the battery cell within the housing in a reversible manner and it can be easily removed.

In particular, the battery cell may not be welded to the holder assembly.

According to the invention, in the battery cell assembly :
- each of the plurality of holder assemblies is arranged between the upper cover and the respective battery cell
- each of the plurality of holder assemblies may comprises a positive electrode mold having electrical insulation and coupled such that a part of the positive electrode bus-bar is exposed to the outside,
- in the negative electrode bus-bar, a positive electrode exposure hole is formed so that it is coupled to the positive electrode mold, and an exposed portion of the positive electrode bus-bar is exposed to the outside,
- the positive electrode bus-bar may comprise a positive electrode disk portion located at the lower portion of the positive electrode mold; a positive electrode connection unit having a shape protruding from the positive electrode disk portion toward the positive electrode terminal and provided to elastically pressurize the positive electrode terminal; and a positive electrode protrusion portion protruding and extending from the positive electrode disk portion toward the upper cover, said positive electrode protrusion portion being configured to be inserted into the positive electrode exposure hole.

In each of the plurality of holder assemblies, the negative electrode bus-bar is arranged between the upper cover and the positive electrode bus-bar, in particular a portion of the positive electrode bus-bar in contact with the positive electrode terminal of the respective battery cell.

Said part of the positive electrode bus-bar may be exposed to the outside such that said part can be reached directly from the outside of the housing. Said part of the positive electrode bus-bar may be exposed in direction of the upper cover.

The upward direction may be in a direction toward the upper cover. The downward direction may be in a direction opposite to the upper cover or in a direction toward the lower cover.

According to the invention, the housing comprises an upper cover, and each of the plurality of holder assemblies is arranged between the upper cover and the respective battery cell and in the negative electrode bus-bar, a positive electrode exposure hole is formed and the positive electrode bus-bar comprises a positive electrode protrusion portion protruding and extending from a lower portion of the positive electrode bus-bar toward the upper cover, said positive electrode protrusion portion being configured to be inserted into the positive electrode exposure hole, said negative electrode bus-bar being arranged between the upper cover and the lower portion of the positive electrode bus-bar.

To achieve the above-described object, according to one example of the present invention, a battery pack comprising at least one battery cell assembly and a battery management system (BMS) is provided.

To achieve the above-described object, according to one example of the present invention, a transportation device comprising the battery pack is provided.

In the battery cell assembly, the battery pack and the transportation device the battery cells may be readily removable from the assembly holder to fulfill the requirements of Article 11 of EU Regulation n°2023/1542 of the European Parliament and of the council.

### [Effects of Invention]

Through one example of the present invention, to improve the problems in the conventional art, a battery cell is provided to be detachable from a holder assembly, whereby a plurality of battery cells mounted without damage to a fixing member in which the battery cells are fixed within an external case, or an electrical connection member (bus-bar, etc.) is provided to be individually replaceable, so that it is intended to provide a battery assembly, a battery pack, and a transportation device comprising the same, capable of effectively reducing replacement costs and time, and lowering battery pack maintenance costs.

The holder assembly is advantageous in that it allows replacing individual battery cell. Indeed, the electrical connections may be achieved directly with the holder assembly and not the battery cells. Each battery cell could be removed from the battery assembly without damaging said battery cell or other battery cells of the battery assembly. When removing a battery cell, the assembly holder may be kept in place to receive a new battery cell. The battery assembly allows discarding only damaged battery cells while keeping into place the functioning one.

The battery assembly facilitates and improves the recycling process of the battery cells and therefore helps reducing the global greenhouse emission. The maintenance of the battery cells targets only defective battery cells allowing reducing the repairability cost and simplifying the repairability process.

Besides, the battery cell may be maintained within the assembly holder by elastically pressurizing the negative electrode of the battery cell by the negative electrode bus-bar. Therefore, the battery cell could be removed and placed within the assembly without needing any tool. Therefore, any defective battery cell could be simply removed and set aside for recycling purposes.

Therefore, the battery assembly of the present invention particularly complies with at least some dispositions of the European regulations concerning batteries and waste batteries namely the EU Regulation n°2023/1542 of the European Parliament and of the council, in particular its article 11.

### [Brief Description of Drawings]

Figure 1 is a cross-sectional diagram schematically showing a welding process of a general battery cell and a bus-bar.
Figure 2 is a perspective diagram schematically showing a battery cell assembly including battery cells fixed using an adhesive of a conventional art.
Figure 3 is a perspective diagram schematically showing an appearance of a battery cell assembly according to one example of the present invention.
Figure 4 is an exploded perspective diagram schematically showing an appearance of a battery cell assembly according to one example of the present invention.
Figure 5 is a perspective diagram schematically showing an appearance in which some secondary batteries and a holder assembly of a battery cell assembly according to one example of the present invention are combined to each other.
Figure 6 is an exploded perspective diagram schematically showing an appearance in which some battery cells and a holder assembly of a battery cell assembly according to one example of the present invention are separated from each other.
Figure 7 is an exploded perspective diagram schematically showing an appearance in which some detailed components of a holder assembly of a battery cell assembly according to one example of the present invention are separated.
Figure 8 is an exploded perspective diagram schematically showing an appearance in which a positive electrode bus-bar and a positive electrode connection unit of a part of a holder assembly of a battery cell assembly according to one example of the present invention are combined.
Figure 9 is a bottom perspective diagram schematically showing an appearance of some components of a holder assembly of a battery cell assembly according to one example of the present invention.
Figure 10 is a partial cross-sectional diagram schematically showing an appearance inside a battery cell assembly according to one example of the present invention.
Figure 11 is a perspective diagram schematically showing an appearance of a negative electrode bus-bar of a battery cell assembly according to another example of the present invention.
Figure 12 is a perspective diagram schematically showing an appearance of the remaining components except for a connection member among components of a battery cell assembly according to one example of the present invention.
Figure 13 is a partial perspective diagram schematically showing an appearance of a region A in the battery pack of Figure 12.
Figure 14 is a bottom perspective diagram schematically showing an appearance of a housing of a battery cell assembly according to one example of the present invention.
Figure 15 is a schematic diagram schematically showing an appearance of a battery pack according to one example of the present invention.
Figure 16 is a schematic diagram schematically showing an appearance of a transportation device according to one example of the present invention.

### [Mode for Invention]

Hereinafter, a battery assembly, a battery pack, and a transportation device comprising the same, according to one example of the present invention will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

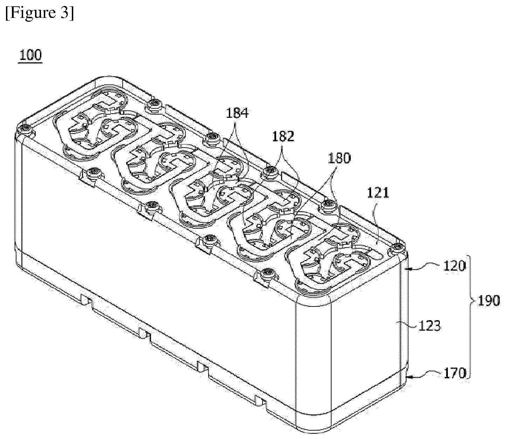

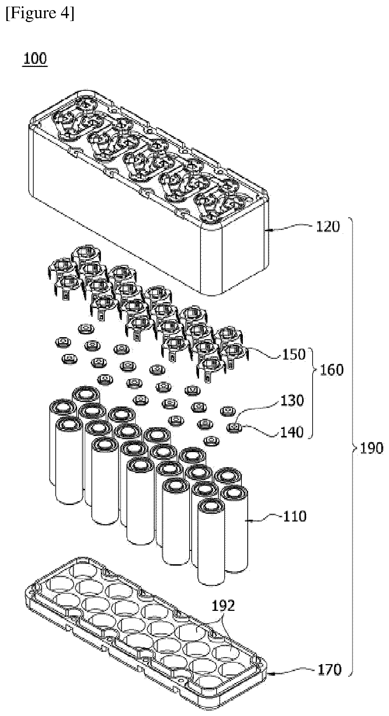

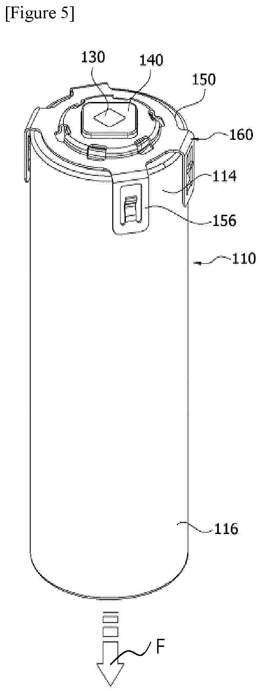

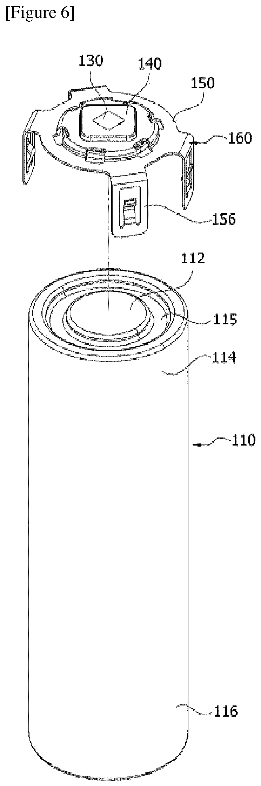

Figure 3 is a perspective diagram schematically showing an appearance of a battery cell assembly (100) according to one example of the present invention. Figure 4 is an exploded perspective diagram schematically showing a battery cell assembly (100) according to one example of the present invention. Figure 5 is a perspective diagram schematically showing an appearance in which some battery cells (110) and a holder assembly (160) of a battery cell assembly (100) according to one example of the present invention are combined to each other. Then, Figure 6 is an exploded perspective diagram schematically showing an appearance in which some battery cells and a holder assembly of a battery cell assembly according to one example of the present invention are separated from each other.

Referring to Figures 3 to 6, the battery cell assembly (100) according to one example of the present invention comprises a plurality of battery cells (110). For example, the battery cell (110) may be a cylindrical battery cell. However, the outer shape of the battery cell is not necessarily limited to a cylindrical shape, which may be a rectangular battery cell with a cuboidal outer shape.

Also, each of the plurality of battery cells (110) may be equipped with a positive electrode terminal (112) and a negative electrode terminal (114). For example, as in Figure 6, the battery cell (110) comprises an electrode assembly, a battery can (116) accommodating the electrode assembly (not shown) therein, and a cap assembly (115) coupled to the upper portion of the battery can (116). At this time, the positive electrode terminal (112) may be located at the upper portion of the cap assembly (115). The negative electrode terminal (114) may be at least a part of the battery can (116). Then, the battery cell (110) may be filled therein with an electrolyte. In Figure 6, the shape of the battery can (116) is shown as a cylindrical shape, but the present invention is not necessarily limited to the cylindrical battery can (116), and a rectangular battery can may be applied.

Here, the electrode assembly comprises a positive electrode, a negative electrode, and a separator interposed between the positive electrode and the negative electrode. Then, the electrode assembly may have a shape wound in the form of a roll. The positive electrode may be made of metallic lithium or an active material containing a lithium alloy. The negative electrode may be made of carbon or an active material containing lithium such as metal oxide. The separator may be manufactured to include a non-conductive polymer such as polyolefin.

Here, the battery can (116) may be formed of an electrically conductive metal material. The outer wall of the battery can (116) may have mechanical rigidity to protect internal components such as the electrode assembly (not shown) and the electrolyte from the outside. The battery can (116) may be electrically connected to the negative electrode.

Here, the cap assembly (115) may be equipped with an insulating gasket (not shown), a venting device (not shown), a PTC element (not shown), and a terminal plate (not shown) connecting the positive electrode terminal (112) and the positive electrode, and the like. However, the cap assembly is not necessarily limited to these components, and any general cap assembly equipped in the battery cell (110) is applicable.

Also, the battery cell assembly (100) according to one example of the present invention comprises a housing (190) provided to accommodate a plurality of battery cells (110). For example, the housing (190) may be provided therein with a storage space that corresponds to or is larger than the size of the plurality of battery cells (110). The housing (190) may be equipped with an electrical insulation material. For example, the housing (190) may be equipped with a plastic material.

In addition, the housing (190) may comprise an upper cover (120) and a lower cover (170). Here, the upper cover (120) may be provided to cover the upper and middle portions of the plurality of battery cells (110). For example, as in Figure 3, the upper cover (120) may be equipped with an upper wall (121), and sidewalls (123) extending downward from the outer periphery of the upper wall (121). The lower cover (170) may be provided to cover the lower portion of the plurality of battery cells (110). A more detailed description of the lower cover (170) will be described below.

Referring again to Figures 3 to 6, the battery cell assembly (100) according to one example of the present invention comprises a plurality of holder assemblies (160). Each of the plurality of holder assemblies (160) is coupled to the inside of the upper cover (120). The plurality of holder assemblies (160) is provided so that each of the plurality of battery cells (110) is detachable. As in Figure 5, the holder assembly (160) may be provided to be combinable to the upper portion of the battery cell (110). As in Figure 6, the holder assembly (160) may be provided to be separable from the upper portion of the battery cell (110).

Therefore, in the battery cell assembly (100) of the present invention, the battery cell (110) is provided to be detachable from the holder assembly (160), whereby a plurality of battery cells (110) mounted without damage to a fixing member in which the battery cells (110) are fixed within an external case, or an electrical connection member (bus-bar, etc.) is provided to be individually replaceable, so that it is possible to prevent a problem in which electrical connection of normal battery cells (110) is disconnected in a process of replacing defective battery cells (110); because there is no need to remove the adhesive when the battery cells (110) are replaced, the replacement costs and time can be effectively reduced; and because a problem in which the normal battery cells (110) are discarded together with the defective battery cells (110) can be prevented, the maintenance costs of the battery cell assembly (100) can be lowered and environmental pollution can be prevented. The battery assembly (100) thus complies with at least some dispositions of the European regulations concerning batteries and waste batteries namely the EU Regulation n°2023/1542 of the European Parliament and of the council, in particular Article 11.

Also, the holder assembly (160) may be provided so that when the positive electrode terminal (112) is in contact with the positive electrode bus-bar (130), the negative electrode bus-bar (150) is in contact with the negative electrode terminal (114).

In addition, the holder assembly (160) may be provided so that when the battery cell (110) is separated from the holder assembly (160), the positive electrode terminal (112) and the negative electrode terminal (114) are sequentially separated from the positive electrode bus-bar (130) and the negative electrode bus-bar (150).

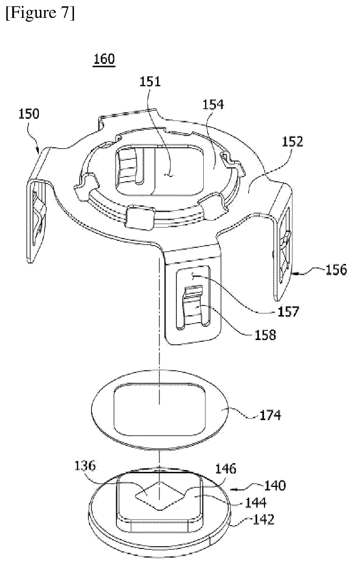

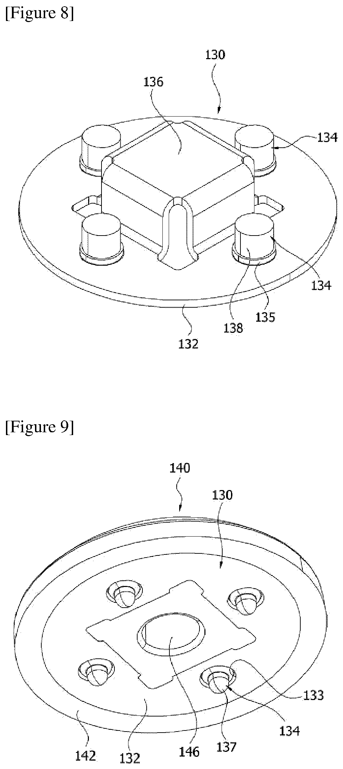

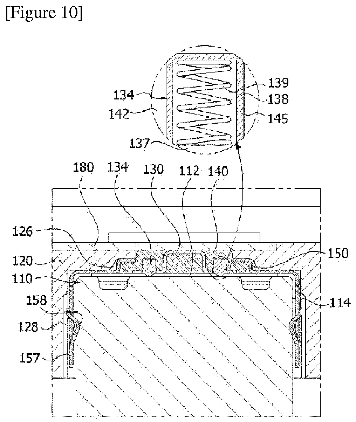

Figure 7 is an exploded perspective diagram schematically showing an appearance in which some detailed components of a holder assembly (160) of a battery cell assembly (100) according to one example of the present invention are separated. Figure 8 is an exploded perspective diagram schematically showing an appearance in which a positive electrode bus-bar (130) and a positive electrode connection unit (134) of a part of a holder assembly (160) of a battery cell assembly (100) according to one example of the present invention are combined. Figure 9 is a bottom perspective diagram schematically showing an appearance of some components of a holder assembly (160) of a battery cell assembly (100) according to one example of the present invention. Then, Figure 10 is a partial cross-sectional diagram schematically showing an appearance inside a battery cell assembly (100) according to one example of the present invention.

Referring to Figures 7 to 10 together with Figures 3 to 6, each of the plurality of holder assemblies (160) comprise a positive electrode bus-bar (130). The positive electrode bus-bar (130) is provided to be electrically connected by contacting the positive electrode terminal (112). The positive electrode bus-bar (130) may be equipped with a metal plate having a structure in which a positive electrode protrusion portion (136) is bent at least once or more toward a mold protrusion portion (144).

Also, each of the plurality of holder assemblies (160) comprises a positive electrode mold (140). The positive electrode mold (140) is equipped with an electrical insulation material. The electrical insulation material may be, for example, a plastic material. The positive electrode mold (140) is provided to be coupled to the positive electrode bus-bar (130). At this time, the positive electrode mold (140) may be combined so that a part of the positive electrode bus-bar (130) is exposed. The method of combining the positive electrode mold (140) and the positive electrode bus-bar (130) may use an insert injection method. For example, through a process of inserting the positive electrode bus-bar (130) into a mold in advance, injecting a molten plastic material with electrical insulation into each cavity of the mold, and then curing it, the positive electrode bus-bar (130) and the positive electrode mold (140) may be combined.

In addition, each of the plurality of holder assemblies (160) comprises a negative electrode bus-bar (150) provided to be connected to the negative electrode terminal (114). The negative electrode bus-bar (150) may be combined with the positive electrode mold (140). The negative electrode bus-bar (150) may be combined with the positive electrode mold (140) using, for example, an adhesive or an adhesive tape (174), and the like. A positive electrode exposure hole (151) may be formed in the negative electrode bus-bar (150) so that the exposed portion of the positive electrode bus-bar (130) is exposed to the outside. For example, the positive electrode exposure hole (151) may be formed so that the upper portion of the positive electrode bus-bar (130) may be exposed to the outside.

Therefore, the battery cell assembly (100) of the present invention comprises a plurality of holder assemblies (160), whereby a plurality of battery cells (110) mounted without damage to a fixing member in which the battery cells (110) are fixed within an external case, or an electrical connection member (bus-bar, etc.) is provided to be individually replaceable, so that it is possible to prevent a problem in which electrical connection of normal battery cells (110) is disconnected in a process of replacing defective battery cells (110); because there is no need to remove the adhesive when the battery cells (110) are replaced, the replacement costs and time can be effectively reduced; and because a problem in which the normal battery cells (110) are discarded together with the defective battery cells (110) can be prevented, the maintenance costs of the battery cell assembly (100) can be lowered and environmental pollution can be prevented.

Also, the positive electrode bus-bar (130) may comprise a positive electrode disk portion (132). The positive electrode disk portion (132) may be located at the lower portion of the positive electrode mold (140). The positive electrode disk portion (132) may have a circular outer periphery portion and a flat plate shape.

In addition, the positive electrode bus-bar (130) may comprise a positive electrode connection unit (134). The positive electrode connection unit (134) may have a shape protruding from the positive electrode disk portion (132) toward the positive electrode terminal (112). The positive electrode connection unit (134) may be provided to elastically pressurize the positive electrode terminal (112). That is, the positive connection unit (134) may be provided so that its protruding length is variable depending on the distance between the positive electrode bus-bar (130) and the positive electrode terminal (112).

Furthermore, the positive electrode bus-bar (130) may comprise a positive electrode protrusion portion (136). The positive electrode protrusion portion (136) may be provided to be inserted into the positive electrode exposure hole (151). The positive electrode protrusion portion (136) may have a shape that protrudes and extends from the positive electrode disk portion (132) in an upward direction opposite to a downward direction (F). The positive electrode protrusion portion (136) is bonded to a connection member (180) (outer bus-bar) to be described below, which may be electrically connected.

Referring again to Figures 9 and 10, the positive electrode connection unit (134) may include a body portion (138). The body portion (138) may have electrical conductivity. That is, the body portion (138) may comprise a material such as an electrically conductive metal. The body portion (138) may be provided to be embedded in the positive electrode mold (140). That is, the body portion (138) of the positive electrode connection unit (134) may be combined to the inside of the positive electrode mold (140) using the insert injection method.

Also, the positive electrode connection unit (134) may comprise a pressurization moving portion (137). The pressurization moving portion (137) may have electrical conductivity. That is, the pressurization moving portion (137) may comprise an electrically conductive metal material. The pressurization moving portion (137) may be equipped at the lower portion of the body portion (138). That is, the pressurization moving portion (137) may be provided to directly contact the positive electrode terminal (112). To this end, the pressurization moving portion (137) may be provided to be movable in a direction of pressurizing the positive electrode terminal (112).

**In** addition, the positive electrode connection unit (134) may comprise an elastic member (139). The elastic member (139) may be embedded into the body portion (138). The elastic member (139) may be provided to elastically pressurize the pressurization moving portion (137) toward the positive electrode terminal (112).

Therefore, the battery cell assembly (100) of the present invention can electrically connect the positive electrode terminal (112) and the positive electrode bus-bar (130) with high reliability by comprising such a positive electrode connection unit (134). **In** addition, the positive electrode connection unit (134) elastically pressurizes the positive electrode terminal (112), whereby it is possible to prevent deformation or damage to the positive electrode connection unit (134) or the positive electrode terminal (112), and thus it is possible to effectively prevent deformation or damage to the positive electrode connection unit (134) or the positive electrode terminal (112), or defective connections occurring in the connecting process of the conventional art.

Referring again to Figures 8 and 9, the positive electrode connection unit (134) may be provided to penetrate the positive electrode disk portion (132). That is, at least one through hole (133) may be formed in the positive electrode disk portion (132) so that the positive electrode connection unit (134) may penetrate. The positive electrode connection unit (134) may be equipped with a stopper (135) on the body portion (138). The stopper (135) may be provided to prevent the pressurization moving portion (137) from moving in the insertion direction in a state where it is inserted into the through hole (133).

Also, the battery cell assembly (100) of the present invention may further comprise a conductive solder (not shown) for electrical connection between the positive electrode terminal (112) and the positive electrode bus-bar (130), and stable fixation with the positive electrode mold (140). The conductive solder may be provided to be filled between the insertion groove (145) and the positive electrode connection unit (134), and between the positive electrode bus-bar (130) and the positive electrode connection unit (134).

In addition, the positive electrode mold (140) may comprise a mold disk portion (142). The mold disk portion (142) may be provided to cover the upper portion of the positive electrode disk portion (132). That is, the mold disk portion (142) may be coupled to the upper portion of the positive electrode disk portion (132). The mold disk portion (142) may have electrical insulation.

Furthermore, the positive electrode mold (140) may comprise a mold protrusion portion (144). The mold protrusion portion (144) may be provided to cover a part of the side and upper surfaces of the positive electrode protrusion portion (136). To this end, the mold protrusion portion (144) may have a shape protruding in an upward direction from the mold disk portion (142). An exposure hole (146) may be formed in the mold protrusion portion (144). The exposure hole (146) may be provided inside the mold protrusion portion (144) so that the upper portion of the positive electrode protrusion portion (136) of the combined positive electrode bus-bar (130) is exposed to the outside. That is, the positive electrode protrusion portion (136) of the positive electrode bus-bar (130) may be embedded into the inside of the mold protrusion portion (144). In addition, the mold disk portion (142) may be equipped with an insertion groove (145). The insertion groove (145) may be provided to accommodate the end of the body portion (138) of the positive electrode connection unit (134).

More specifically, the negative electrode bus-bar (150) may comprise a negative electrode disk portion (152). The negative electrode disk portion (152) may be provided to be coupled to the upper cover (120). For example, as a double-sided adhesive tape (not shown) or an adhesive (not shown) is added between the upper surface of the negative electrode disk portion (152) and the inner surface of the upper cover (120), the negative electrode disk portion (152) may be bonded to the upper cover (120). However, it is not necessarily limited to such a bonding method, and the negative electrode disk portion (152) may be coupled to the inner surface structure of the upper cover (120) through mechanical coupling. For example, the negative electrode disk portion (152) may be coupled to the upper cover (120) using an interference fit method or an insert injection method.

Also, the negative electrode bus-bar (150) may comprise a negative electrode convex portion (154). The negative electrode convex portion (154) may be convexly formed in an upward direction from the negative electrode disk portion (152) to form a storage space in which the positive electrode mold (140) is accommodated. The negative electrode convex portion (154) may be formed through a casting or rolling process.

In addition, the negative electrode bus-bar (150) may comprise a negative electrode connection portion (156). The negative electrode connection portion (156) may have a shape bent in a downward direction (F) from the negative electrode disk portion (152). The negative electrode connection portion (156) may have a shape extending from the negative electrode disk portion (152) to directly contact the negative electrode terminal (114). For example, as in Figure 7, the negative electrode bus-bar (150) may be equipped with four negative electrode connection portions (156). The four negative electrode connecting portions (156) may have a shape bent in a downward direction (F) from the negative electrode disk portion (152) to connect to the negative electrode terminal (114) of the battery can (116) located at the lower portion.

Therefore, as the negative electrode bus-bar (150) in the battery cell assembly (100) of the present invention comprises such negative electrode convex portion (154) and negative electrode connection portion (156), the positive electrode bus-bar (130) can be stably accommodated and coupled, whereby it is possible to induce stable contact between the positive electrode bus-bar (130) and the positive electrode terminal (112), and moreover, it is possible to directly connect to the negative electrode terminal (114) of the battery cell (110) coupled to the lower portion of the holder assembly (160). Ultimately, such a negative electrode bus-bar (150) can implement the compact holder assembly (160), thereby effectively increasing the energy density of the battery cell assembly (100).

Also, a connection opening (157), in which a portion is perforated and formed, may be formed in the negative electrode connection portion (156). Then, the negative electrode connection portion (156) may be equipped with a connection protrusion (158) protruding and extending from the inner periphery of the connection opening (157). Such a connection opening (157) may be formed larger than the connection protrusion (158). Accordingly, when the connection protrusion (158) contacts the negative electrode terminal (114), it does not contact the inner periphery of the connection opening (157) even if the connection protrusion (158) is deformed, whereby it is possible to prevent damage due to collision of the connection protrusion (158).

In addition, the connection protrusion (158) may be provided to enable elastic pressurization. The connection protrusion (158) may have a shape in which a part of the negative connection portion (156) protrudes toward the negative electrode terminal (114). The connection protrusion (158) may have a shape extending long in one direction. The connection protrusion (158) may have a structure bent in a V-shape toward the battery can (116). Such a connection protrusion (158) in a V-shape has an advantage to be capable of elastically pressurizing the negative electrode terminal (114).

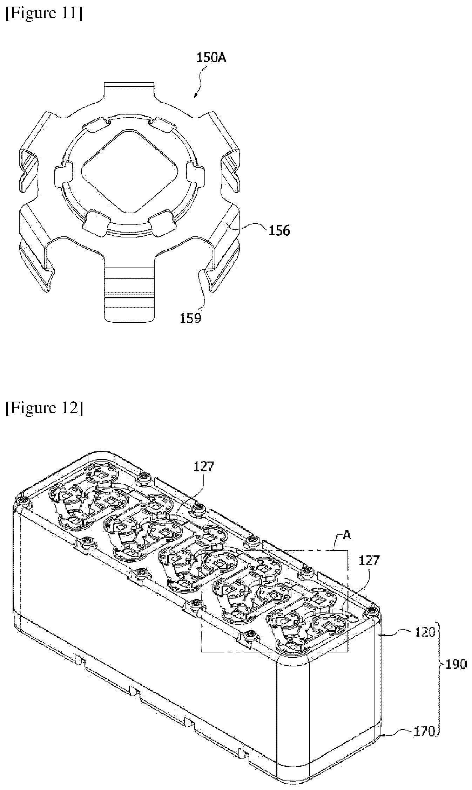

Figure 11 is a perspective diagram schematically showing an appearance inside a negative electrode bus-bar (150A) of a battery cell assembly according to another example of the present invention.

Referring to Figure 11, in the negative electrode bus-bar (150A) of the battery cell assembly according to another example of the present invention, the negative electrode connection portion (156) may have a shape different from that of the negative electrode connection portion (156) of the negative electrode bus-bar (150) in Figure 7. That is, the connection opening (157) is not formed in the negative connection portion (156) of Figure 11, and a connection convex portion (159) having a concavo-convex shape protruding toward the battery can (116) may be equipped. Such a connection convex portion (159) may elastically pressurize the negative electrode terminal (114) through the concavo-convex shape.

The battery cell could be removed and be mounted from/into the assembly holder without tool. Therefore, any defective battery cell could be simply removed and set aside for recycling purposes and a functioning battery cell could mounted instead, thus facilitating the maintenance process.

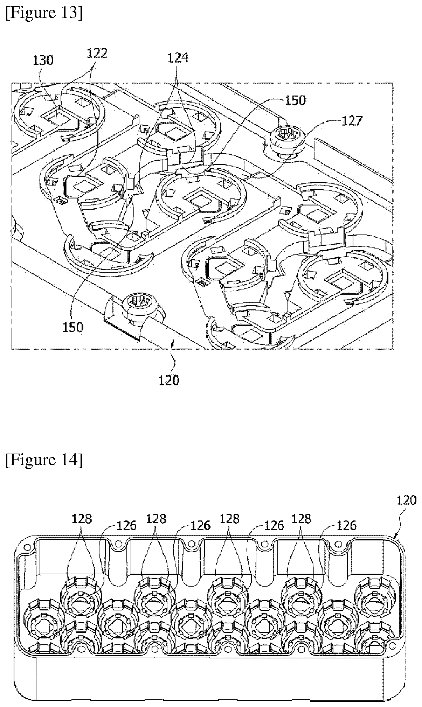

Figure 12 is a perspective diagram schematically showing an appearance of the remaining components except for a connection member (180) among components of a battery cell assembly (100) according to one example of the present invention. Then, Figure 13 is a partial perspective diagram schematically showing an appearance of a region A in the battery pack of Figure 12.

Referring again to Figures 12 and 13 together with Figure 3, the upper cover (120) may have a positive electrode opening (124) formed for contact between the positive electrode bus-bar (130) and a connection member (180) to be described below. Specifically, the positive electrode opening (124) may have an open shape so that the positive electrode bus-bar (130) is exposed to the outside.

Also, the upper cover (120) may have a negative electrode opening (122) formed for contact between the negative electrode bus-bar (150) and a connection member (180) to be described below. Specifically, the negative electrode opening (122) may have an open shape so that the negative electrode bus-bar (150) is exposed to the outside.

In addition, a connection groove (127) provided to insert a connection member (180) to be described below may be formed in the upper cover (120). For example, the connection groove (127) may have a size corresponding to that of the connection member (180).

Furthermore, the battery cell assembly (100) of the present invention may further comprise a plurality of connection members (180). The connection member (180) may be mounted on the upper portion of the upper cover (120). Each of the plurality of connection members (180) may comprise at least one of a positive electrode contact portion (182) and a negative electrode contact portion (184). The positive electrode contact portion (182) may be provided to contact the positive electrode disk portion (132) of the positive electrode bus-bar (130) through the positive electrode opening (124). As one example, the negative electrode contact portion (184) may be provided to contact the negative electrode disk portion (152) of the negative electrode bus-bar (150) through the negative electrode opening (122). The connection member (180) may have a shape extending along the connection groove (127) formed on the upper surface of the upper cover (120). That is, the connection member (180) may have a shape bent according to the upper surface structure of the upper cover (120). For example, as in Figure 3, the battery cell assembly (100) of the present invention may comprise a connection member (180) electrically connected to a plurality of positive electrode bus-bars (130), and a connection member (180) connected to the positive electrode bus and the negative electrode bus-bar (150).

Figure 14 is a bottom perspective diagram schematically showing an appearance of an upper cover (120) of a battery cell assembly (100) according to one example of the present invention.

Referring again to Figure 14 together with Figure 4, the upper cover (120) may be equipped with a storage portion (126) accommodating the holder assembly (160). Specifically, the storage portion (126) may be formed on the inner surface of the upper cover (120). The storage portion (126) may have a groove shape corresponding to the outer surface of the holder assembly (160). For example, the storage portion (126) may have an embedded shape so that the negative electrode disk portion (152) and the negative electrode convex portion (154) of the negative electrode bus-bar (150) are inserted therein. At this time, the holder assembly (160) may be bonded to the storage portion (126) using an adhesive or a double-sided tape. However, the holder assembly (160) is not necessarily coupled to the upper cover (120) by a bonding method, and in the battery cell assembly (100) according to another example, the negative electrode bus-bar (150) may be coupled to the upper cover (120) through injection molding. Such a coupling method through injection molding can omit the coupling process of coupling multiple negative electrode bus-sbars (150) to the upper cover (120), whereby it is possible to effectively shorten the production time, and it is possible to solve a problem of causing defects due to inadequate adhesion.

Also, a fixing groove (128) provided so that the negative connecting portion (156) of the negative electrode bus-bar (150) is inserted to be fitted therein may be formed in the storage portion (126). At this time, the negative electrode connection portion (156) may be fixed to the fixing groove (128) in an interference fit shape.

Meanwhile, referring again to Figures 3 and 4, the lower cover (170) of the battery cell assembly (100) of the present invention may be a lower cover (170) provided to be coupled to the lower portion of the upper cover (120). For example, the upper cover (120) and the lower cover (170) may be screwed together using screw bolts (not shown). In addition, the lower cover (170) may be provided to cover the lower portion of each of the plurality of battery cells (110). To this end, a plurality of mounting grooves (192) accommodating the lower portion of each of the plurality of battery cells (110) may be formed in the lower cover (170).

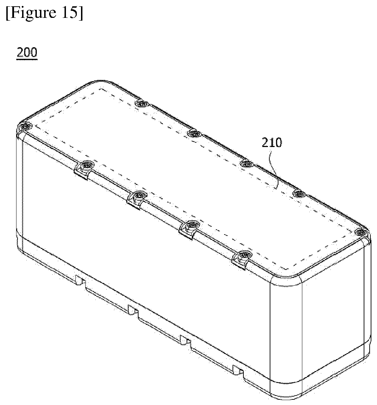

Figure 15 is a schematic diagram schematically showing an appearance of a battery pack (200) according to one example of the present invention.

Meanwhile, referring to Figure 15, the present application provides a battery pack (200) according to one example of the present invention. The battery pack (200) comprises at least one battery cell assembly (100), and a battery management system (BMS) (210). Specifically, the battery management system may perform battery cell overcharge/overdischarge prevention and temperature management, and the like. The battery management system (210) may be embedded into the inside of the battery pack (200).

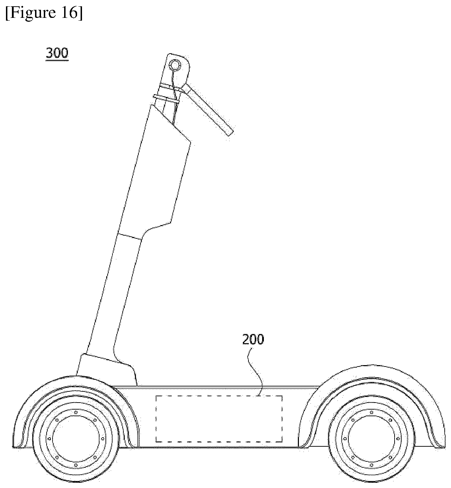

Figure 16 is a schematic diagram schematically showing an appearance of a transportation device (300) according to one example of the present invention.

Meanwhile, referring to Figure 16, the present application provides a transportation device (300) according to one example of the present invention. Such a transportation device (300) comprises the battery pack (200) of the present invention. That is, the transportation device (300) may have the battery pack (200) embedded therein. The transportation device (300) may use the battery pack (200) as a moving power. For example, the transportation device (300) may be an electric vehicle, an electric bicycle, an electric scooter, an electric wheelchair, an unmanned robot, an unmanned aircraft, and the like.

### [Explanation of Reference Numerals]

60: adhesive
50: bus-bar
40: battery cell assembly
30: battery cell
20: welding rod
10: electrode terminal
100: battery cell assembly
110, 112, 114, 115, 116: battery cell, positive electrode terminal, negative electrode terminal, cap assembly, battery can
120: upper cover
122, 124, 126, 127, 128: negative electrode opening, positive electrode opening, storage portion, connection groove, fixing groove
130: positive electrode bus-bar
132, 134, 136: positive electrode disk portion, positive electrode connection unit, positive electrode protrusion portion
137, 138, 139: pressurization moving portion, body portion, elastic member
133, 135: through hole, stopper
140: positive electrode mold
142, 144, 146: mold disk portion, mold protrusion portion, exposure hole
150: negative electrode bus-bar
151: positive electrode exposure hole
152, 154, 156, 157, 158, 159: negative electrode disk portion, negative electrode convex portion, negative electrode connection portion, connection opening, connection protrusion, connection convex portion
160: holder assembly
180, 182, 184: connection member, positive electrode contact portion, negative electrode contact portion
190, 192: lower cover, mounting groove
200: battery pack
300: transportation device

## Claims

1. A battery cell assembly (100) comprising:
a plurality of battery cells (110),
a plurality of holder assemblies (160),
a housing (190) provided to accommodate the plurality of battery cells;
wherein each battery cell is equipped with a positive electrode terminal (112) and a negative electrode terminal (114); and
wherein each holder assembly (160) includes a positive electrode bus-bar (130) provided to be electrically connected by contacting a respective positive electrode terminal (112) of a battery cell (110), and a negative electrode bus-bar (150) provided to be connected to a respective negative electrode terminal (114) of a battery cell (110),
wherein each battery cell (110) is readily removable from a respective holder assembly (160),
**characterized in that**:
the housing (190) comprises an upper cover (120), and each of the plurality of holder assemblies (160) is arranged between the upper cover and the respective battery cell (110), and in the negative electrode bus-bar (150), a positive electrode exposure hole (151) is formed, wherein the positive electrode bus-bar (130) comprises:
a positive electrode protrusion portion (136) protruding and extending from a lower portion of the positive electrode bus-bar toward the upper cover, said positive electrode protrusion portion being configured to be inserted into the positive electrode exposure hole, said negative electrode bus-bar being arranged between the upper cover and the lower portion of the positive electrode bus-bar.

2. The battery cell assembly (130) according to claim 1, **characterized in that**
each of the plurality of holder assemblies (160) comprises a positive electrode mold (140) having electrical insulation and coupled such that a part of the positive electrode bus-bar (130) is exposed to the outside, and the positive electrode bus-bar comprises:
a positive electrode disk portion (132) located at the lower portion of the positive electrode mold;
a positive electrode connection unit (134) having a shape protruding from the positive electrode disk portion toward the positive electrode terminal (112) and provided to elastically pressurize the positive electrode terminal,
**characterized in that** the positive electrode connection unit comprises:
a body portion (138) having electrical conductivity and provided to be inserted into the positive electrode mold;
a pressurization moving portion (137) having electrical conductivity, equipped at the lower portion of the body portion, being in direct contact with the positive electrode terminal, and provided to be movable in a direction of pressurizing the positive electrode terminal; and
an elastic member (139) embedded into the body portion and provided to elastically pressurize the pressurization moving portion toward the positive electrode terminal.

3. The battery cell assembly (100) according to claim 2, **characterized in that**
at least one through hole (133) is formed in the positive electrode disk portion (132), and
the positive electrode connection unit (134) is equipped with
a stopper (135) on the body portion (138) to prevent the pressurization moving portion (137) in a state where it is inserted into the through hole from moving in the insertion direction.

4. The battery cell assembly (100) according to claim 3, **characterized in that**
the positive electrode mold (140) comprises:
a mold disk portion (142) provided to cover the upper portion of the positive electrode disk portion (132); and
a mold protrusion portion (144) protruding in an upward direction from the mold disk portion (142) to cover the side portion of the positive electrode protrusion portion (136) and having an exposure hole (146) formed so that the upper portion of the positive electrode protrusion of the coupled positive electrode bus-bar (130) is exposed to the outside.

5. The battery cell assembly (100) according to claim 1, **characterized in that**
the negative electrode bus-bar (150) comprises:
a negative electrode disk portion (152) coupled to the housing (190); and
a negative electrode connection portion (156) bent in a downward direction (F) from the negative electrode disk portion and extending from the negative electrode disk portion to be in direct contact with the negative electrode terminal.

6. The battery cell assembly (100) according to claim 5, **characterized in that**
in the negative electrode connection portion (156),
a connection opening (157) is partially formed, and
a connection protrusion (158) extending long from the inner periphery of the connection opening and bent to partially protrude toward the negative electrode terminal (114) to enable elastic pressurization is formed.

7. The battery cell assembly (100) according to claim 5, **characterized in that**
the negative electrode connection portion (156) is equipped with
a connection convex portion (159) partially protruding toward the negative electrode terminal to enable elastic pressurization.

8. The battery cell assembly (100) according to claim 5, **characterized in that**
the housing (190) is equipped with a storage portion (126) accommodating the holder assembly (160), and
a fixing groove (128) provided so that the negative electrode connection portion (156) of the negative electrode bus-bar (150) is inserted to be fitted therein is formed in the storage portion.

9. The battery cell assembly (100) according to claim 1, **characterized in that**
in the housing (190),
a positive electrode opening (124) opened so that the positive electrode bus-bar (130) is exposed to the outside and a negative electrode opening (122) opened so that the negative electrode bus-bar (150) is exposed to the outside are formed.

10. The battery cell assembly (100) according to claim 1, **characterized in that**
the upper cover (120) is provided to cover the upper and middle portions of the plurality of battery cells (110); and the housing (190) further comprises:
a lower cover (170) provided to cover the lower portion of the plurality of battery cells.

11. The battery cell assembly according to claim 1, **characterized by** further comprising
a plurality of connection members (180) mounted on the upper portion of the upper cover, and each being equipped with at least one of a positive electrode contact portion (182) in contact with the positive electrode bus-bar (130) through the positive electrode opening, and a negative electrode contact portion (184) in contact with the negative electrode bus-bar (150) through the negative electrode opening.

12. A battery pack (200) comprising at least one battery cell assembly (100) according to any one of claims 1 to 11, and a battery management system (BMS).

13. A transportation device (300) comprising the battery pack (200) according to claim 12.

## Patentansprüche

1. Batteriezellenanordnung (100), umfassend:
eine Vielzahl von Batteriezellen (110),
eine Vielzahl von Halteranordnungen (160),
ein Gehäuse (190), das vorgesehen ist, um die Vielzahl von Batteriezellen aufzunehmen;
wobei jede Batteriezelle mit einem positiven Elektrodenanschluss (112) und einem negativen Elektrodenanschluss (114) ausgestattet ist; und
wobei jede Halteranordnung (160) eine positive Elektroden-Sammelschiene (130), die vorgesehen ist, um durch Kontaktieren eines jeweiligen positiven Elektrodenanschlusses (112) einer Batteriezelle (110) elektrisch verbunden zu werden, und eine negative Elektroden-Sammelschiene (150) enthält, die vorgesehen ist, um mit einem jeweiligen negativen Elektrodenanschluss (114) einer Batteriezelle (110) verbunden zu werden,
wobei jede Batteriezelle (110) von einer jeweiligen Halteranordnung (160) leicht entfernbar ist,
**dadurch gekennzeichnet, dass**:
das Gehäuse (190) eine obere Abdeckung (120) umfasst, und jede der Vielzahl von Halteranordnungen (160) zwischen der oberen Abdeckung und der jeweiligen Batteriezelle (110) angeordnet ist, und eine positive Elektroden-Freilegungsöffnung(151) in der negativen Elektroden-Sammelschiene (150) ausgebildet ist,
wobei die positive Elektroden-Sammelschiene (130) umfasst:
einen positiven Elektroden-Vorsprungsabschnitt (136), der von einem unteren Abschnitt der positiven Elektroden-Sammelschiene zur oberen Abdeckung hin vorsteht und sich von diesem erstreckt, wobei der positive Elektroden-Vorsprungsabschnitt so konfiguriert ist, dass er in die positive Elektroden-Freilegungsöffnung eingesetzt wird, wobei die negative Elektroden-Sammelschiene zwischen der oberen Abdeckung und dem unteren Abschnitt der positiven Elektroden-Sammelschiene angeordnet ist.

2. Batteriezellenanordnung (130) nach Anspruch 1, **dadurch gekennzeichnet, dass**
jede der Vielzahl von Halteranordnungen (160) eine positive Elektrodenform (140) umfasst, die eine elektrische Isolierung aufweist und so gekoppelt ist, dass ein Teil der positiven Elektroden-Sammelschiene (130) nach außen freiliegt, und die positive Elektroden-Sammelschiene umfasst:
einen positiven Elektroden-Scheibenabschnitt (132), der sich am unteren Abschnitt der positiven Elektrodenform befindet;
eine positive Elektroden-Verbindungseinheit (134), die eine Form aufweist, die vom positiven Elektroden-Scheibenabschnitt zum positiven Elektrodenanschluss (112) hin vorsteht und vorgesehen ist, um den positiven Elektrodenanschluss elastisch mit Druck zu beaufschlagen,
**dadurch gekennzeichnet, dass** die positive Elektroden-Verbindungseinheit umfasst:
einen Körperabschnitt (138), der eine elektrische Leitfähigkeit aufweist und vorgesehen ist, um in die positive Elektrodenform eingesetzt zu werden;
einen Druckbeaufschlagungs-Bewegungsabschnitt (137), der eine elektrische Leitfähigkeit aufweist, am unteren Abschnitt des Körperabschnitts angebracht ist, in direktem Kontakt mit dem positiven Elektrodenanschluss steht und vorgesehen ist, um in einer Richtung der Druckbeaufschlagung des positiven Elektrodenanschlusses beweglich zu sein; und
ein elastisches Element (139), das in den Körperabschnitt eingebettet und vorgesehen ist, um den Druckbeaufschlagungs-Bewegungsabschnitt in Richtung des positiven Elektrodenanschlusses elastisch mit Druck zu beaufschlagen.

3. Batteriezellenanordnung (100) nach Anspruch 2, **dadurch gekennzeichnet, dass**
mindestens ein Durchgangsloch (133) im positiven Elektroden-Scheibenabschnitt (132) ausgebildet ist, und
die positive Elektroden-Verbindungseinheit (134) ausgestattet ist mit
einem Anschlag (135) am Körperabschnitt (138), um zu verhindern, dass sich der Druckbeaufschlagungs-Bewegungsabschnitt (137) in einem Zustand, in dem er in das Durchgangsloch eingesetzt ist, in die Einsetzrichtung bewegt.

4. Batteriezellenanordnung (100) nach Anspruch 3, **dadurch gekennzeichnet, dass**
die positive Elektrodenform (140) umfasst:
einen Formscheibenabschnitt (142), der vorgesehen ist, um den oberen Abschnitt des positiven Elektroden-Scheibenabschnitts (132) abzudecken; und
einen Formvorsprungsabschnitt (144), der in einer Aufwärtsrichtung vom Formscheibenabschnitt (142) vorsteht, um den Seitenabschnitt des positiven Elektroden-Vorsprungsabschnitts (136) abzudecken, und eine Freilegungsöffnung (146) aufweist, die so ausgebildet ist, dass der obere Abschnitt des positiven Elektrodenvorsprungs der gekoppelten positiven Elektroden-Sammelschiene (130) nach außen freiliegt.

5. Batteriezellenanordnung (100) nach Anspruch 1, **dadurch gekennzeichnet, dass**
die negative Elektroden-Sammelschiene (150) umfasst:
einen negativen Elektroden-Scheibenabschnitt (152), der mit dem Gehäuse (190) gekoppelt ist; und
einen negativen Elektroden-Verbindungsabschnitt (156), der in einer Abwärtsrichtung (F) vom negativen Elektroden-Scheibenabschnitt gebogen ist und sich vom negativen Elektroden-Scheibenabschnitt erstreckt, um in direktem Kontakt mit dem negativen Elektrodenanschluss zu sein.

6. Batteriezellenanordnung (100) nach Anspruch 5, **dadurch gekennzeichnet, dass**
im negativen Elektroden-Verbindungsabschnitt (156),
eine Verbindungsöffnung (157) teilweise ausgebildet ist, und
ein Verbindungsvorsprung (158) ausgebildet ist, der sich lang vom Innenumfang der Verbindungsöffnung erstreckt und gebogen ist, um teilweise zum negativen Elektrodenanschluss (114) hin vorzustehen, um eine elastische Druckbeaufschlagung zu ermöglichen.

7. Batteriezellenanordnung (100) nach Anspruch 5, **dadurch gekennzeichnet, dass**
der negative Elektroden-Verbindungsabschnitt (156) ausgestattet ist mit
einem konvexen Verbindungsabschnitt (159), der teilweise zum negativen Elektrodenanschluss hin vorsteht, um eine elastische Druckbeaufschlagung zu ermöglichen.

8. Batteriezellenanordnung (100) nach Anspruch 5, **dadurch gekennzeichnet, dass**
das Gehäuse (190) mit einem Aufnahmeabschnitt (126) ausgestattet ist, der die Halteranordnung (160) aufnimmt, und
eine Befestigungsnut (128), die so vorgesehen ist, dass der negative Elektroden-Verbindungsabschnitt (156) der negativen Elektroden-Sammelschiene (150) eingesetzt wird, um darin eingepasst zu werden, im Aufnahmeabschnitt ausgebildet ist.

9. Batteriezellenanordnung (100) nach Anspruch 1, **dadurch gekennzeichnet, dass**
im Gehäuse (190)
eine positive Elektrodenöffnung (124), die so geöffnet ist, dass die positive Elektroden-Sammelschiene (130) nach außen freiliegt, und eine negative Elektrodenöffnung (122), die so geöffnet ist, dass die negative Elektroden-Sammelschiene (150) nach außen freiliegt, ausgebildet sind.

10. Batteriezellenanordnung (100) nach Anspruch 1, **dadurch gekennzeichnet, dass**
die obere Abdeckung (120) vorgesehen ist, um die oberen und mittleren Abschnitte der Vielzahl von Batteriezellen (110) abzudecken; und das Gehäuse (190) ferner umfasst:
eine untere Abdeckung (170), die vorgesehen ist, um den unteren Abschnitt der Vielzahl von Batteriezellen abzudecken.

11. Batteriezellenanordnung nach Anspruch 1, **dadurch gekennzeichnet, dass** sie ferner
eine Vielzahl von Verbindungselementen (180) umfasst, die am oberen Abschnitt der oberen Abdeckung montiert sind und jeweils mit mindestens einem von einem positiven Elektroden-Kontaktabschnitt (182) in Kontakt mit der positiven Elektroden-Sammelschiene (130) durch die positive Elektrodenöffnung und einem negativen Elektroden-Kontaktabschnitt (184) in Kontakt mit der negativen Elektroden-Sammelschiene (150) durch die negative Elektrodenöffnung ausgestattet sind.

12. Batteriepack (200), umfassend mindestens eine Batteriezellenanordnung (100) nach einem der Ansprüche 1 bis 11 und ein Batteriemanagementsystem (BMS).

13. Transportvorrichtung (300), umfassend das Batteriepack (200) nach Anspruch 12.

## Revendications

1. Assemblage de cellules de batterie (100) comprenant :
une pluralité de cellules de batterie (110),
une pluralité d'assemblages de support (160),
un boîtier (190) prévu pour loger la pluralité de cellules de batterie ;
dans lequel chaque cellule de batterie est équipée d'une borne d'électrode positive (112) et d'une borne d'électrode négative (114) ; et
dans lequel chaque assemblage de support (160) inclut une barre omnibus d'électrode positive (130) prévue pour être connectée électriquement en contactant une borne d'électrode positive respective (112) d'une cellule de batterie (110), et une barre omnibus d'électrode négative (150) prévue pour être connectée à une borne d'électrode négative respective (114) d'une cellule de batterie (110),
dans lequel chaque cellule de batterie (110) est facilement amovible d'un assemblage de support respectif (160),
**caractérisé en ce que** :
le boîtier (190) comprend un couvercle supérieur (120), et chacun de la pluralité d'assemblages de support (160) est agencé entre le couvercle supérieur et la cellule de batterie respective (110), et dans la barre omnibus d'électrode négative (150), un trou d'exposition d'électrode positive (151) est formé,
dans lequel la barre omnibus d'électrode positive (130) comprend :
une partie en saillie d'électrode positive (136) faisant saillie et s'étendant à partir d'une partie inférieure de la barre omnibus d'électrode positive vers le couvercle supérieur, ladite partie en saillie d'électrode positive étant configurée pour être insérée dans le trou d'exposition d'électrode positive, ladite barre omnibus d'électrode négative étant agencée entre le couvercle supérieur et la partie inférieure de la barre omnibus d'électrode positive.

2. L'assemblage de cellules de batterie (130) selon la revendication 1, **caractérisé en ce que**
chacun de la pluralité d'assemblages de support (160) comprend un moule d'électrode positive (140) ayant une isolation électrique et couplé de telle sorte qu'une partie de la barre omnibus d'électrode positive (130) est exposée à l'extérieur, et la barre omnibus d'électrode positive comprend :
une partie de disque d'électrode positive (132) située au niveau de la partie inférieure du moule d'électrode positive ;
une unité de connexion d'électrode positive (134) ayant une forme faisant saillie à partir de la partie de disque d'électrode positive vers la borne d'électrode positive (112) et prévue pour pressuriser élastiquement la borne d'électrode positive,
**caractérisé en ce que** l'unité de connexion d'électrode positive comprend :
une partie de corps (138) ayant une conductivité électrique et prévue pour être insérée dans le moule d'électrode positive ;
une partie mobile de mise sous pression (137) ayant une conductivité électrique, équipée au niveau de la partie inférieure de la partie de corps, étant en contact direct avec la borne d'électrode positive, et prévue pour être mobile dans une direction de pressurisation de la borne d'électrode positive ; et
un élément élastique (139) intégré dans la partie de corps et prévu pour pressuriser élastiquement la partie mobile de mise sous pression vers la borne d'électrode positive.

3. L'assemblage de cellules de batterie (100) selon la revendication 2, **caractérisé en ce que**
au moins un trou traversant (133) est formé dans la partie de disque d'électrode positive (132), et
l'unité de connexion d'électrode positive (134) est équipée de
une butée (135) sur la partie de corps (138) pour empêcher la partie mobile de mise sous pression (137), dans un état où elle est insérée dans le trou traversant, de se déplacer dans la direction d'insertion.

4. L'assemblage de cellules de batterie (100) selon la revendication 3, **caractérisé en ce que**
le moule d'électrode positive (140) comprend :
une partie de disque de moule (142) prévue pour couvrir la partie supérieure de la partie de disque d'électrode positive (132) ; et
une partie en saillie de moule (144) faisant saillie dans une direction vers le haut à partir de la partie de disque de moule (142) pour couvrir la partie latérale de la partie en saillie d'électrode positive (136) et ayant un trou d'exposition (146) formé de sorte que la partie supérieure de la saillie d'électrode positive de la barre omnibus d'électrode positive couplée (130) soit exposée à l'extérieur.

5. L'assemblage de cellules de batterie (100) selon la revendication 1, **caractérisé en ce que**
la barre omnibus d'électrode négative (150) comprend :
une partie de disque d'électrode négative (152) couplée au boîtier (190) ; et
une partie de connexion d'électrode négative (156) pliée dans une direction vers le bas (F) à partir de la partie de disque d'électrode négative et s'étendant à partir de la partie de disque d'électrode négative pour être en contact direct avec la borne d'électrode négative.

6. L'assemblage de cellules de batterie (100) selon la revendication 5, **caractérisé en ce que**
dans la partie de connexion d'électrode négative (156),
une ouverture de connexion (157) est partiellement formée, et
une saillie de connexion (158) s'étendant longuement depuis la périphérie intérieure de l'ouverture de connexion et pliée pour faire partiellement saillie vers la borne d'électrode négative (114) pour permettre une pressurisation élastique est formée.

7. L'assemblage de cellules de batterie (100) selon la revendication 5, **caractérisé en ce que**
la partie de connexion d'électrode négative (156) est équipée de
une partie convexe de connexion (159) faisant partiellement saillie vers la borne d'électrode négative pour permettre une pressurisation élastique.

8. L'assemblage de cellules de batterie (100) selon la revendication 5, **caractérisé en ce que**
le boîtier (190) est équipé d'une partie de stockage (126) logeant le support
d'assemblage (160), et
une rainure de fixation (128) prévue de sorte que la partie de connexion d'électrode négative (156) de la barre omnibus d'électrode négative (150) soit insérée pour y être ajustée est formée dans la partie de stockage.

9. L'assemblage de cellules de batterie (100) selon la revendication 1, **caractérisé en ce que**
dans le boîtier (190),
une ouverture d'électrode positive (124) ouverte de sorte que la barre omnibus d'électrode positive (130) est exposée à l'extérieur et une ouverture d'électrode négative (122) ouverte de sorte que la barre omnibus d'électrode négative (150) est exposée à l'extérieur sont formées.

10. L'assemblage de cellules de batterie (100) selon la revendication 1, **caractérisé en ce que**
le couvercle supérieur (120) est prévu pour couvrir les parties supérieure et médiane de la pluralité de cellules de batterie (110) ; et le boîtier (190) comprend en outre :
un couvercle inférieur (170) prévu pour couvrir la partie inférieure de la pluralité de cellules de batterie.

11. L'assemblage de cellules de batterie selon la revendication 1, **caractérisé en ce qu'**il comprend en outre
une pluralité d'éléments de connexion (180) montés sur la partie supérieure du couvercle supérieur, et chacun étant équipé d'au moins l'un d'une partie de contact d'électrode positive (182) en contact avec la barre omnibus d'électrode positive (130) à travers l'ouverture d'électrode positive, et d'une partie de contact d'électrode négative (184) en contact avec la barre omnibus d'électrode négative (150) à travers l'ouverture d'électrode négative.

12. Un bloc-batterie (200) comprenant au moins un assemblage de cellules de batterie (100) selon l'une quelconque des revendications 1 à 11, et un système de gestion de batterie (BMS).

13. Un dispositif de transport (300) comprenant le bloc-batterie (200) selon la revendication 12.
